# EUROPEAN PATENT APPLICATION

(11) **EP 2 631 470 A1**
(43) Date of publication of application: **28.08.2013**
(21) Application number: 12156714.3
(22) Date of filing: 23.02.2012
(51) Int. Cl.: F03D 7/04, F03D 7/02

(54) **Method to align the yaw angle of a nacelle of a wind turbine**

(71) Applicant: Siemens Aktiengesellschaft, 80333 München (DE)
(72) Inventor: Pedersen, Henrik, 7400 Herning (DK)

(57) **Abstract**

The invention relates to a method to align the yaw angle (YA) or yaw-direction of a nacelle (NA) of a wind turbine (WT), while the wind turbine (WT) is part of a wind farm (WF).
According to the method invented the wind speed (WS) of the incoming wind is measured. The measured wind speed (WS) is compared with a predefined wind speed. A first wind turbine (WT1) of the wind farm (WF) is turned from operational mode into idle mode if the measured wind speed (WS) is below the predefined wind speed. The yaw angle (YA1) of the nacelle (NA1) of the first wind turbine (WT1), which is in idle mode, is saved as first yaw angle (YA1). The first yaw angle (YA1) is communicated to at least a second wind turbine (WT2) of the wind farm (WF), which is turned from operational mode into idle mode. The yaw angle of the nacelle of the second wind turbine (WT2) is adjusted to the first yaw angle (YA1). The first yaw angle (YA1) is kept by the nacelle of the second wind turbine (WT2) while it is in idle mode.

## Description

### Description

### Method to align the yaw angle of a nacelle of a wind turbine

The invention relates to a method to align the yaw angle or yaw-direction of a nacelle of a wind turbine, while the wind turbine is part of a wind farm.

An individual wind turbine of a wind farm stops the production of electrical energy, if the wind speed at the site of this wind turbine falls below a predetermined wind speed. This is known as standby-mode or idle mode of the wind turbine.

The wind speed is measured by meteorological instruments, which are preferably arranged at the top of the nacelle of the wind turbine.

The nacelle of the wind turbine shows a specific yaw angle when the wind speed falls below the predetermined wind speed. This specific yaw angle is kept as long as the wind turbine is in standby-mode or idle mode.

Wind farms are quite large thus the wind speed is different at the different wind turbine sites. Thus the nacelles of the wind turbines of the wind farm will show individual and different yaw angles when the wind turbines reach their individual idle-mode. As a result the nacelles of the wind turbines will be aligned individually and in different yaw angles or yaw directions.

Each wind turbine of the wind farm needs to align its individual yaw angle of the nacelle to the incoming wind when the wind speed increases. Thus the overall electrical output of the wind farm increases in a time-delayed manner as each wind turbine needs some time to measure the wind speed and to align its nacelle to an optimized yaw angle in view to the incoming wind.

It is therefore the aim of the invention to align the yaw angle of a wind turbine of a wind farm in an accelerated manner.

### This aim is reached by the features of claim 1.

Preferred configurations of the invention are addressed by the dependent claims.

According to the method invented the wind speed of the incoming wind is measured.

If the measured wind speed falls below a predefined wind speed a first wind turbine of a wind farm is turned from operational mode into idle mode.

The yaw angle of the nacelle of the first wind turbine, which is in idle mode, is saved as first yaw angle.

The first yaw angle is communicated to at least a second wind turbine of the wind farm, which is even in idle mode. The yaw angle of the second wind turbine is adjusted to this first yaw angel.

The first yaw angle is kept by the nacelle of the second wind turbine while it is in idle mode.

As a final result all wind turbines of a wind farm, which are in idle mode, will show the same yaw angle.

In a preferred configuration the incoming wind is measured at the site of the first wind turbine.

Preferably the wind speed is measured by a meteorological instrument.

Preferably the meteorological instrument is arranged at the top of the nacelle of the wind turbine.

In another preferred configuration the incoming wind is measured using a meteorological mast, which is preferably close to the site of the first wind turbine or which is arranged close to the wind farm.

In a preferred configuration the first yaw angle is saved by a server, which is used to control the wind farm. The server even might be used to store relevant parameters of the wind farm and/or to store and evaluate wind turbine measurements.

Preferably the server communicates the first yaw angle to the at least second wind turbine or even to all remaining wind turbines of the wind farm.

In another preferred configuration the first yaw angle is saved at the first wind turbine and is communicated from the first wind turbine to the second wind turbine or to all remaining wind turbines of the wind farm.

In a preferred configuration the pitch angle of the blades of the first wind turbine is saved when the first wind turbine is turned from operational mode into idle mode. The pitch angle of the first wind turbine is saved as first pitch angle. The first pitch angle is communicated to at least a second wind turbine of the wind farm, which is in idle mode.

The pitch angle of the blades of the second wind turbine is adjusted to this first pitch angel.

Thus all wind turbines of a wind farm, which are in idle mode, additionally show the same blade pitch angel.

In another preferred configuration the rotor angle of the first wind turbine is saved when the first wind turbine is turned from operational mode into idle mode.

The rotor angle defines the orientation of the blades in relation to the vertical plane.

For example the first blade of the wind turbine may be oriented vertically pointing to the ground, while the second and the third blade of the wind turbine may be oriented in a +120° angle (counted clockwise and counter-clockwise) in relation to the first blade.

The rotor angle of the first wind turbine is saved as first rotor angle. The first rotor angle is communicated to at least a second wind turbine of the wind farm, which is in idle mode. The rotor angle of the second wind turbine is adjusted to this first rotor angel.

Thus all wind turbines of a wind farm, which are in idle mode, additionally show the same rotor angel.

A function is used for the alignment-procedure as discussed above. The function is preferably implemented at the server of the wind farm.

Preferably the function monitors the yaw direction and/or the pitch angle and/or the rotor angle of all wind turbines of the wind farm and preferably calculates mean values of those parameters. These mean values are used for the alignment of the wind turbines.

The method-steps as claimed are initiated if the measured wind speed is beneath the predefined wind speed for a given period of time.

The method invented allows a fast and optimized alignment of all wind turbines of a wind farm.

If the direction of the incoming wind is maintained over time the overall electrical output of the wind farm is increased faster than before. The time, which is needed for the alignment, is reduced and optimized in view to the prior art known.

The method invented results even in a high aesthetic level as all wind turbines of the wind farm are always aligned in the same direction - no matter if the wind turbines are in operational mode or in idle mode.

Wind turbines often show aerial warning lights at the tip-ends of the blades. These lights are used to warn helicopters or planes when they are approaching a wind farm.

If the rotor angles of all wind turbines are aligned additionally, all of those warning lights will be aligned, too. The warning lights of the whole wind farm are aligned in their angle and height thus they appear in a regular manner. Thus the optical detection of the wind farm is enhanced.

If the rotor angles and the yaw angles of all wind turbines are aligned even the radar-detection of the wind farm will be improved. Radar-scatters will be reduced thus ships, helicopters and planes will detect the wind farm in an improved manner, at least if they are approaching the wind farm from certain directions.

The invention is shown in more detail by help of a figure.
FIG 1 shows wind turbines of a wind farm, which are in operational mode,
FIG 2 shows wind turbines of the same wind farm, while the wind turbines are in idle mode and the nacelles of theses wind turbines are aligned by their yaw angles according to the invention, and
FIG 3 shows wind turbines of another wind farm, while the wind turbines are in idle mode and while the nacelles of theses wind turbines and additionally the rotor angles are aligned according to the invention

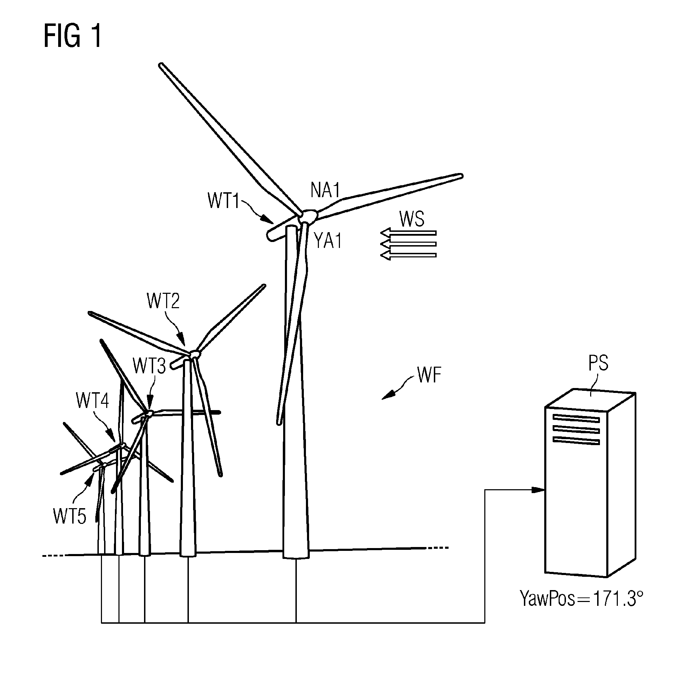

FIG 1 shows five wind turbines WT1 to WT5 of a wind farm WF, while each wind turbine WT1 to WT5 of the wind farm WF is in operational mode.

The wind speed WS of the incoming wind is measured at the first wind turbine WT1 for example.

The measured wind speed WS is compared with a predefined wind speed. If the measured wind speed WS falls below or is below the predefined wind speed the first wind turbine WT1 of the wind farm WF is turned from operational mode into idle mode.

The yaw angle YA1 of the nacelle NA1 of the first wind turbine WT1 is saved as first yaw angle YA1. For this purpose a park server PS of the wind farm WF is used.

The first yaw angle YA1 is communicated to the remaining wind turbines WT2 to WT5 of the wind farm. For this purpose the park server PS of the wind farm is used, too.

The nacelle-yaw-angles of the other wind turbines WT2 to WT5 are adjusted to this first yaw angel YA1 and the other wind turbines WT2 to WT5, when they are in idle mode.

As a result all nacelles of the wind turbines WT1 to WT5 of the wind farm are aligned into the same direction and thus show the same yaw angle YA1.

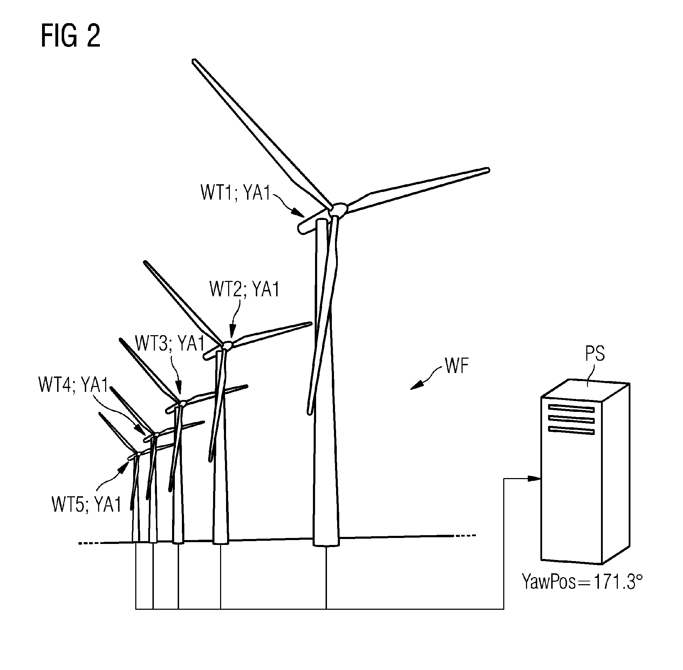

### This is shown in FIG 2.

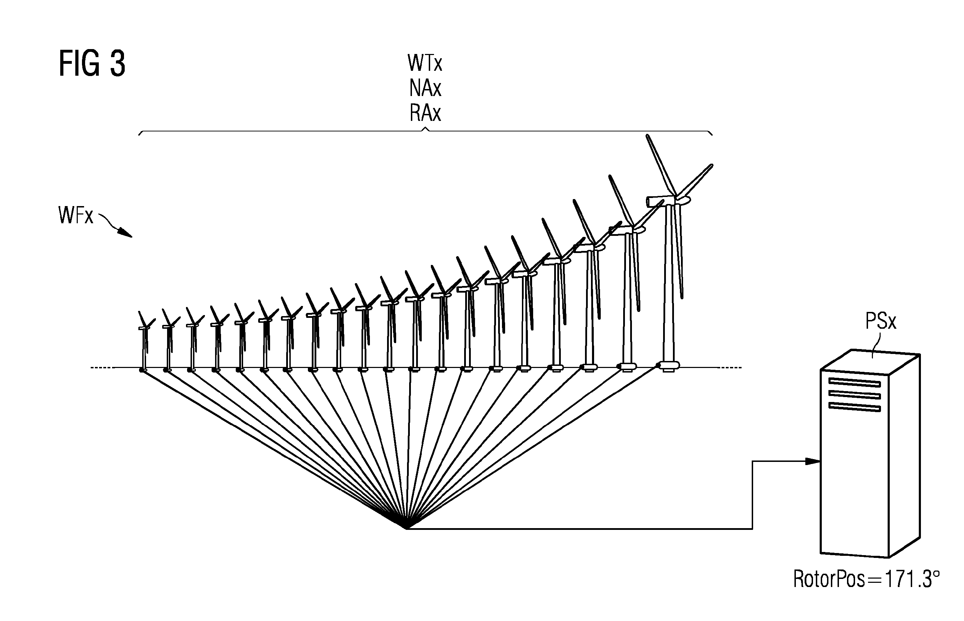

FIG 3 shows wind turbines WTx of another wind farm WFx. The wind turbines WTx are in idle mode.

All nacelles NAx of the wind turbines WTx are aligned by their yaw angles, thus all nacelles NAX are aligned to a certain direction.

Additionally the rotor angles RAX of the wind turbines WTx are aligned, too. In this example a first blade of the rotor of all wind turbines WTx is pointing towards the ground while the remaining blades are pointing in a ±120°-direction in relation to the first blade.

As a result all wind turbines WTx show the same rotor angle RAx. For this alignment a park server PSx of the wind farm WFx may be used.

## Claims

1. Method to align the yaw angle (YA1) of a nacelle of a wind turbine (WT1, ...), while the wind turbine (WT1, ...) is part of a wind farm (WF),
- wherein the wind speed (WS) of the incoming wind is measured and wherein the wind speed (WS) is compared with a predefined wind speed,
- wherein a first wind turbine (WT1) of the wind farm (WF) is turned from operational mode in idle mode if the measured wind speed (WS) is below the predefined wind speed,
- wherein the yaw angle (YA1) of the nacelle (NA1) of the first wind turbine (WT1), which is in idle mode, is saved as first yaw angle (YA1),
- wherein the first yaw angle (YA1) is communicated to at least a second wind turbine (WT2) of the wind farm (WF), which is in idle mode,
- wherein the yaw angle of the nacelle of the second wind turbine (WT2) is adjusted to the first yaw angle (YA1), and is kept by the nacelle of the second wind turbine (WT2), which is in idle mode.

2. Method according to claim 1, wherein the wind speed (WS) of the incoming wind is measured at the site of the first wind turbine (WT1).

3. Method according to claim 2,
- wherein the wind speed is measured by a meteorological instrument, which is arranged at the top of the nacelle (NA1) of the first wind turbine (WT1), or
- wherein the wind speed is measured by a meteorological instrument, which is arranged at a meteorological mast, while the mast is arranged close to the site of the first wind turbine (WT1) or while the mast is arranged close to the site of the wind farm (WF).

4. Method according to claim 1, wherein the first yaw angle (YA1) is saved by a wind park server (PS).

5. Method according to claim 4, wherein the wind park server at least communicates the first yaw angle (YA1) to the second wind turbine (WT2).

6. Method according to claim 1, wherein the first yaw angle (YA1) is saved at the first wind turbine (WT1) and is communicated from the first wind turbine (WT1) to the at least second wind turbine (WT2).

7. Method according to claim 1,
- wherein the pitch angle of the blades of the first wind turbine (WT1) is saved as first pitch angle, when the first wind turbine (WT1) is turned from operational mode in idle mode,
- wherein the first pitch angle is at least communicated to the second wind turbine (WT2),
- wherein the pitch angle of the blades of the second wind turbine (WT2) is adjusted to this first pitch angel when the second wind turbine (WT2) is in idle mode.

8. Method according to claim 1,
- wherein the rotor angle of the first wind turbine (WT1) is saved as first rotor angle, when the first wind turbine (WT1) is turned from operational mode in idle mode,
- wherein the first rotor angle is at least communicated to the second wind turbine,
- wherein the rotor angle of the second wind turbine is adjusted to this first rotor angel when the second wind turbine is in idle mode.

9. Method according to claim 1, wherein the method-steps are initiated if the measured wind speed is beneath the predefined wind speed for a given period of time.
